# EUROPEAN PATENT APPLICATION

(11) **EP 3 474 036 A1**
(43) Date of publication of application: **24.04.2019**
(21) Application number: 17815658.4
(22) Date of filing: 16.06.2017
(51) Int. Cl.: G01S 13/04, G01S 13/50, G01S 7/292

(54) **HUMAN BODY DETECTION SENSOR USING DOPPLER RADAR**

(30) Priority: 21.06.2016 KR 20160003503 U
(71) Applicant: CIS4U, Anyang-si, Gyeonggi-do 14042 (KR)
(72) Inventor: KIM, Young-A, Suwon-si Gyeonggi-do 16697 (KR)
(74) Representative: HGF Limited
(86) International application number: PCT/KR2017/006302
(87) International publication number: WO 2017/222245

(57) **Abstract**

The present invention relates to a human body detection sensor using a Doppler radar, comprising: a Doppler radar unit transmitting a Doppler radar signal and receiving the transmitted Doppler radar signal so as to output a signal processing result corresponding to a frequency difference between both signals; a filtering and amplifying unit for filtering out, from the signal outputted by the Doppler radar unit, a frequency band preset so as to correspond to a vibration generated by the internal bioactivity of a human body, and for amplifying the filtered signal; and a determination and control unit for determining whether a human body is detected by analyzing the signal outputted by the filtering and amplifying unit, and for outputting the determined result signal when the human body is detected.

## Description

### [Technical Field]

The present invention relates to a human body sensor, and particularly, to a human body sensor using a Doppler radar.

### [Background Art]

There are known various human body sensors to detect human bodies or other objects. For example, an ultrasonic or ultraviolet (UV) sensor radiates an ultrasonic wave or UV ray in a room or porch to detect the presence or absence of a human body depending on a difference in the reflection of the ultrasonic wave or UV ray made between when somebody is in and when nobody is there. An infrared (IR) sensor installed on the ceiling of the porch detects IR rays emitted from a person entering the porch, determining the presence or absence of a human body. Also in use are motion sensors capturing an image in a sensing area through a camera and detecting the movement of an object from the captured image. Such human body sensors have wide applications, such as automated light-on/off devices that turn on or off, e.g., porch or indoor lights depending on whether a human being is there.

However, such ultrasonic and light sensors cannot detect objects off the direction of ultrasonic wave or light or may cause errors due to, e.g., external light, noise, or thermal source.

Further, convention human body sensors are configured to typically detect and respond to the motion of a human or thing larger than a predetermined threshold to avoid malfunctions. Thus, they oftentimes fail to provide an accurate detection result on tiny movements of a human or thing which are smaller than the threshold. For example, where one makes no or tiny motion, the human body sensors might not detect it despite the presence of the person, failing to precisely control the automatic light-on/off device associated therewith to light on or off.

### [Detailed Description of the Invention]

### [Technical Problem]

Thus, the present invention aims to provide a human body sensor using a Doppler radar which may accurately determine the presence or absence of a person even when she remains motionless.

Another object of the present invention is to provide a human body sensor using a Doppler radar which is able to detect the presence or absence of a human in a low-cost, more compact and simplified configuration.

### [Technical Solution]

To achieve the foregoing objectives, according to the present invention, a human body sensor using a Doppler radar comprises a Doppler radar unit configured to send out a Doppler radar signal, receive the Doppler radar signal sent out, and output a signal processing result corresponding to a difference between the two signals, a filtering and amplifying unit configured to filter a preset frequency band corresponding to a vibration generated by a biometric activity in a human body from a signal output from the Doppler radar unit and amplify the filtered signal, and a determining and controlling unit configured to analyze the signal output from the filtering and amplifying unit, determine whether the human body is detected, and when the human body is detected, output a determination result signal.

The preset frequency band of the filtering and amplifying unit may be lower than a frequency selected from among frequencies from 2Hz to 10Hz.

The human body sensor may further comprise an auxiliary filtering and amplifying unit configured to filter a frequency band preset to correspond to a vibration generated by a human motion from the signal output from the Doppler radar unit and amplify the filtered signal, wherein the determining and controlling unit may be configured to additionally analyze the signal output from the auxiliary filtering and amplifying unit to additionally analyze whether the human body is detected.

The preset frequency band of the auxiliary filtering and amplifying unit may be lower than a frequency selected from among frequencies from 20Hz to 80Hz.

### [Advantageous Effects]

As set forth above, the human body sensor using a Doppler radar according to the present invention may more accurately determine the presence or absence of a human even when the person remains motionless and may be implemented in a low-cost, more compact and simplified configuration.

### [Brief Description of Drawings]

Fig. 1 is a block diagram illustrating an overall configuration of a human body sensor using a Doppler radar according to an embodiment of the present invention;
Fig. 2 is a block diagram schematically illustrating a configuration of a Doppler radar sensor applicable to the present invention;
Fig. 3 is a view illustrating examples of output waveforms of major components of Fig. 1; and
Fig. 4 is a block diagram illustrating an overall configuration of a human body sensor using another Doppler radar according to another embodiment of the present invention.

### [Mode for Carrying out the Invention]

Hereinafter, preferred embodiments of the present invention are described in detail with reference to the accompanying drawings. In the following description, particular items such as specific elements are shown for easier understanding of the present invention. However, it should be appreciated by one of ordinary skill in the art that various changes may be made thereto without departing from the scope of the present invention.

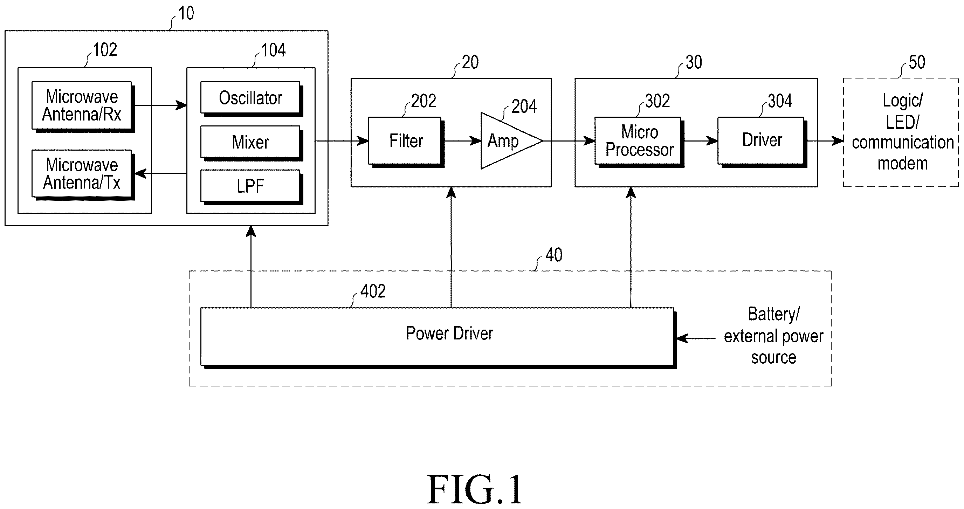

Fig. 1 is a block diagram illustrating an overall configuration of a human body sensor using a Doppler radar according to an embodiment of the present invention. Referring to Fig. 1, according to an embodiment of the present invention, a human body sensor using a Doppler radar may include a Doppler radar unit 10, a filtering and amplifying unit 20, a determining and controlling unit 30, a power unit 40, and a result application unit 50.

For example, the Doppler radar unit 10 sends out a Doppler radar signal to a particular space, receives the Doppler radar signal sent out, and outputs a signal processing result corresponding to a difference between the two signals. The Doppler radar unit 10 includes a transmit/receive antennas 10 to transmit and receive Doppler radar signals. The transmit/receive antennas 10 includes a transmit antenna (TX) to transmit Doppler radar signals and a receive antenna (RX) to receive Doppler radar signals.

The Doppler radar unit 10 also includes a Doppler radar signal processor 104 that generates a Doppler radar signal for transmission, compares the transmitted signal and a signal received by the transmit/receive antennas 10, and outputs a signal processing result corresponding to a difference in frequency between the two signals. The Doppler radar signal processor 104 may include an oscillator to generate Doppler radar signals, a mixer to mix signals transmitted and received, and a low pass filter (LPF) to filter out the high-frequency component (e.g., 100MHz to 40GHz) corresponding to the Doppler radar signal from the output of the mixer.

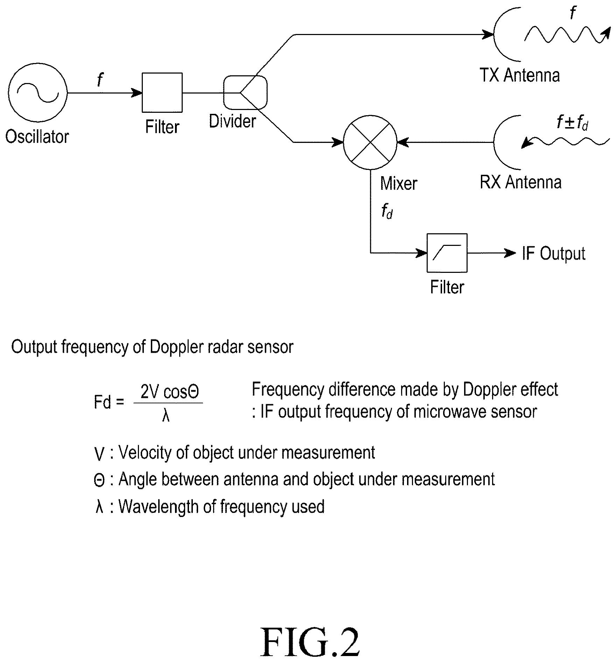

The Doppler radar unit 10 configured as above may adopt, and be the same in operation principle as, the configuration of a typical Doppler radar sensor as shown in Fig. 2. Referring to Fig. 2, a signal generated by the oscillator and divided into one side through a high-frequency filter and a divider (e.g., a directional coupler) is transmitted through the TX antenna, reflected by an object under measurement, and received through the RX antenna. The received signal is provided to the mixer. The mixer mixes the received signal with the signal generated by the oscillator and divided into the other side through the high-frequency filter and the divider and outputs a signal fd (e.g., a mid-frequency band) corresponding to a difference in frequency between the two signals. The output signal undergoes a low pass filter (LPF), which filters out high-frequency components, to be free from spurious emissions and is then output.

Meanwhile, the filtering and amplifying unit 20 filters a preset frequency band corresponding to a vibration caused by the biometric activity in the human body, such as from the heartbeat and/or respiration, from the signal output from the Doppler radar unit 10 and amplifies the filtered signal, as per the characteristics of the present invention. The filtering and amplifying unit 20 may include a filter 202 that passes only frequencies specific to, e.g., human heartbeats or respiration and an amplifier 204 that amplifies the signal output from the filter 202.

The determining and controlling unit 30 analyzes the signal output from the filtering and amplifying unit 20, determines whether a human body is detected depending on whether there is a signal output corresponding to the preset frequency band corresponding to the biometric activity in the human body, and when a human body is detected, outputs a driving signal (determination result signal) to control the operation of the result application unit 50 which is preset downstream.

The determining and controlling unit 30 may include a microprocessor 302 to analyze the output signal of the filtering and amplifying unit 20 to determine whether a human body is detected and a driver 304 to output a driving signal to the result application unit 50 under the control of the microprocessor 302. The microprocessor 302 may include an AD converter (not shown) to convert the signal amplified by the filtering and amplifying unit 20 into a digital signal or a signal comparator (not shown) configured to detect a signal of a particular voltage or more and a controller (not shown) to control the operation signals of the signal comparator and the AD converter. The driver 304 may include a driver structure to receive signals from the controller and convert the signals into driving signals for the result application unit 50.

The result application unit 50 may be implemented as some selected from among various application structures for use of human body sensing signals in various sectors according to an embodiment of the present invention. For example, the result application unit 50 may be configured as, e.g., a logic signal input device for remote data transmission and control, an LED or display module to display the state of the product, or a wired/wireless communication modem for remote control and monitoring.

The result application unit 50 may be implemented in an actual product that embodies an embodiment of the present invention or may be implemented in a separate external associated device (product). In such case, the product of the present invention may be configured to provide only driving signals to the external associated product. For example, where the external associated product is an indoor lighting device (or light control system), the product according to an embodiment of the present invention may be configured to provide a (driving) signal of +5V to the external associated product when a human body is detected. The external associated indoor lighting device may be implemented to receive the corresponding driving signal and properly operate to turn on the indoor light. Besides, the product implementing an embodiment of the present invention may be implemented to have a switch or relay to be able to establish or cut off a connection to the operating power source or sensing system of the external associated device as per converted logic signals or to operate in a pull-up or pull-down scheme to allow the external associated device to recognize the state of detection of the sensor.

Meanwhile, the wired/wireless communication modems mentioned as examples of the result application unit 50 may include, e.g., a wired LAN and wireless modems, e.g., Wi-Fi modems, Bluetooth modems, Zigbee modems, Z-wave modems, and general-purpose RF modems (modems operated at 433MHz or 900MHz) and may perform the function of wirelessly transferring what is detected by the sensor to another external associated device.

The power unit 40 may include a power driver 42 that receives power from the internal battery or external power source, converts the power into operation power for each of the components, and provides the operation power. The power unit 40 may include an AC-DC converter or SMPS to convert external AC power into DC power or a battery or a charging circuit. In some embodiments, the power unit 40 may be configured to provide operation power to the result application unit 50 or may be configured to have a structure to receive power from an external device associated with the actual product to which an embodiment of the present invention is applied.

A human body sensor using a Doppler radar according to an embodiment of the present invention may be configured as set forth above. In the above configuration, among others, the filtering and amplifying unit 20 is a very critical component to enable human body detection in a compact, simplified, and low-cost manner as per the present invention.

There are conventional techniques proposed to contactlessly detect, e.g., human heartbeat using a Doppler radar. Such techniques mostly propose a structure to identify signals detected from a human body as accurate as possible and display the result on an LCD-equipped display device. These conventional techniques take advantage of the results of observation that various Doppler frequencies are produced from a human body are they are very low, and they typically suggest schemes to figure out human body signal components by adopting a digital signal processing fast Fourier transform (FFT) device which is complicated and expensive to convert Doppler signals detected from a human body into their respective frequency components.

To that end, the conventional art is implemented to amplify all signals less than a few tens of MHz or a few hundreds of MHz, thus requiring a high-performance amplifier and posing an increased load on it.

In comparison, according to the present invention, the filtering and amplifying unit 20 is implemented to performing filtering and amplification only on low-frequency signals less than a few Hz (e.g., less than a frequency selected from among frequencies from 2Hz to 10Hz) among the Doppler signals generated from, e.g., the heartbeat, respiration, or motion, to detect the human body in a particular range. That is, the filter 202 in the filtering and amplifying unit 20 is implemented to filter only on low-frequency signals less than a few Hz (e.g., implemented to pass only less than 10Hz signals), and the amplifier 204 is implemented to amplify the signals filtered by the filter 202. The filter 202 may be implemented as a simplified RC (resistor and capacitor) low-pass filter structure using, e.g., a surface mount device (SMD)-type device or a lead-type device mounted on a printed circuit board (PCB) that does not require precise and accurate filtering characteristics. Likewise, the amplifier 204 may be simply implemented as, e.g., a dual-operational amplifier (Dual OP Amp) for audio.

Typically, low-cost compact amplifiers have a small dynamic range or an inferior signal-to-noise ratio (SNR). As compared with the prior art, the present invention may, however, produce high-gain, superior SNR detection signals even with a compact, low-cost amplifier by reducing the bandwidth of signals to be amplified to, e.g., one several millionth of the input signal bandwidth as compared with the prior art.

As such, the present invention allows for observation of the Doppler effect in a simplified way, focusing on heartbeats, respiration, or other human biometric activities through the filtering and amplifying unit 20, enabling an efficient detection of human biometric signals with a simplified structure.

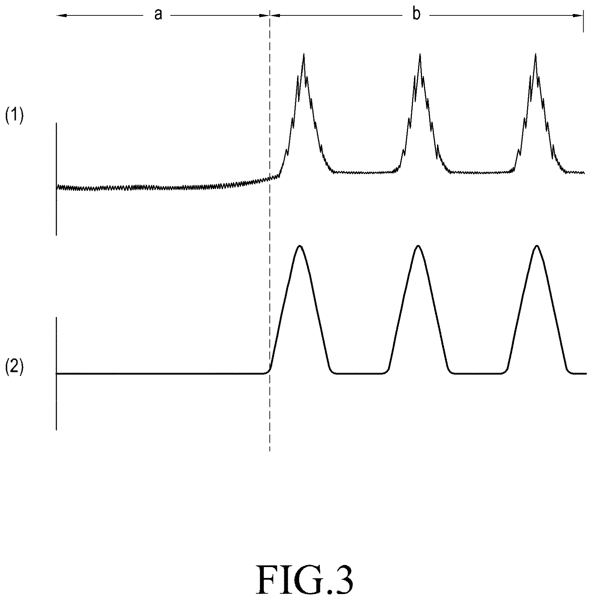

Fig. 3 illustrates example output waveforms of major components of Fig. 1. For ease of description, the shape or size may partially be exaggerated or simplified. Referring to Fig. 3, waveform (1) may be an output waveform of, e.g., the Doppler radar unit 10 of Fig.1, and waveform (2) may be an output waveform of the filter 202 (or amplifier 204) of the filtering and amplifying unit 20 of Fig. 1. Of the waveforms of Fig. 3, section a may regard, e.g., where nobody is in the sensing area, and section b may regard, e.g., where a person is in the sensing area.

As per conventional technology proposed, such an output signal of the Doppler radar unit 10 as waveform (1) of Fig. 3 has been used, focusing primarily on accurate and precise waveform analysis. As compared, the present invention performs filtering only on low-frequency signals, such as of waveform (2), less than several Hz (e.g., less than a frequency selected from among frequencies from 2Hz to 10Hz) among the output signals of the Doppler radar unit 10 through the filtering and amplifying unit 20. A signal corresponding to a vibration caused by a biometric activity in the human body, such as heartbeat or respiration may be sufficiently detected from such filtered signal. Thus, it is possible to detect a human body by adopting a simplified filtering and amplifying structure. The configuration and operation of a human body sensor using a Doppler radar, according to an embodiment of the present invention, may be made as set forth above. Although particular embodiments of the present invention have been described above, various modifications may be made thereto without departing from the scope of the present invention. Accordingly, the scope of the present invention should be defined by the following claims and equivalents thereof, but not by the above-described embodiments.

For example, according to another embodiment of the present invention, in addition to the filtering and amplifying unit 20 passing and amplifying signals less than, e.g., 10Hz, the configuration of Fig. 1 may further include a configuration for passing and amplifying signals less than, e.g., 50Hz (e.g., less than a frequency selected from among frequencies from 20Hz to 80Hz) from output signals the Doppler radar unit 10. The added configuration is intended for more accurately detecting a human motion that is larger than, e.g., mere heartbeat or respiration while the person remains nearly motionless. A signal detected by the added configuration may likewise be provided to the determining and controlling unit 30 that may then detect whether there is a motion of the human body through the sensed signal in a more accurate way.

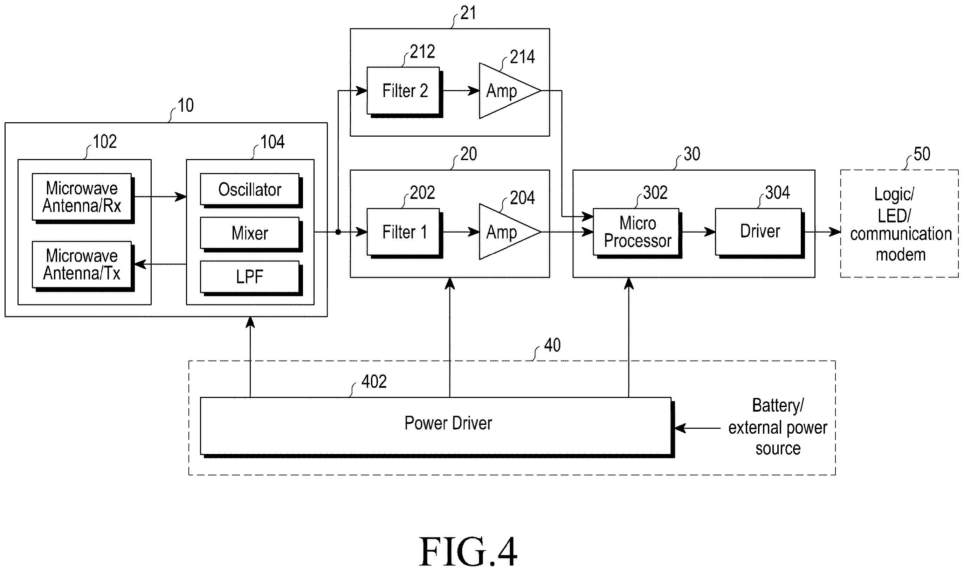

Fig. 4 is a block diagram illustrating an overall configuration of a human body sensor using another Doppler radar according to another embodiment of the present invention. According to an embodiment shown in Fig. 4, a human body sensor using a Doppler radar may include a Doppler radar unit 10, a filtering and amplifying unit 20, a determining and controlling unit 30, a power unit 40, and a result application unit 50 which have the same configuration and operation as the configuration of Fig. 1.

In addition to the configuration, the embodiment of Fig. 4 may add an auxiliary filtering and amplifying unit 21 that further receives output signals of the Doppler radar unit 10 and passes and amplifies signals less than, e.g., 50Hz (e.g., less than a frequency selected from among frequencies from 20Hz to 80Hz). The filtering bandwidth of the auxiliary filtering and amplifying unit 21 may be a bandwidth appropriate to detect a motion where there is a slight motion of the person. The auxiliary filtering and amplifying unit 21 may include a filter 212 that passes frequencies specific only to a person's motion and an amplifier 214 that amplifies signals output from the filter 212.

The output of the auxiliary filtering and amplifying unit 21 is additionally provided to the determining and controlling unit 30. The determining and controlling unit 30 analyzes the signal output from the auxiliary filtering and amplifying unit 21 in addition to the output signal of the filtering and amplifying unit 20, further determining whether the human body is detected.

Like the filtering and amplifying unit 20, the auxiliary filtering and amplifying unit 21 may implement the filter 212 with a simple RC (resistor and capacitor) low-pass filter structure and may simply implement the amplifier 214 with, e.g., a dual OP amp for audio.

### [Industrial Availability]

A human body sensor using a Doppler radar according to the present invention has broad applications to so-called smart lighting. For example, the human body sensor may interwork with a porch light, enabling the porch light to stably remain on even where there is little or no human motion. Further, the human body sensor may interwork with an external light installed outdoors to enable the external light to remain on when there is somebody outside the entrance door, thereby leading to an easier check on strangers and hence enhanced security. The human body sensor may also interwork with a bathroom light to keep the bathroom light on even when the bathroom light switch is turned off from outside. Or, the human body sensor may be implemented to automatically turn the bathroom light on only when someone is inside the bathroom.

The human body sensor of the present invention may also be used in so-called 'smart patient monitoring.' For example, the human body sensor may interwork with a patient monitoring system to check whether a patient is in the room. For example, the human body sensor may be implemented to sense, and notify of, a departing of a dementia patient off the radius of monitoring. The human body sensor may also interwork with, e.g., a jail security system, to monitor, e.g., whether a prisoner is in the jail cell.

The human body sensor of the present invention may also be used as a paramedical sensor to remotely detect, e.g., cardiac arrest during sleep in, e.g., medical organizations, wards, or nursing homes. For example, there are techniques for monitoring critically ill patients via typically expensive contact-type heart rate monitoring devices attached thereto. However, it might be unrealistic to use such pricey HRM devices for patients who do not need critical or intensive care or are staying in a nursing home for regular care. In such cases, embodiments of the present invention may be applied in efficiently establishing a monitoring network.

## Claims

1. A human body sensor using a Doppler radar, comprising:
a Doppler radar unit configured to send out a Doppler radar signal, receive the Doppler radar signal sent out, and output a signal processing result corresponding to a difference between the two signals;
a filtering and amplifying unit configured to filter a preset frequency band corresponding to a vibration generated by a biometric activity in a human body from a signal output from the Doppler radar unit and amplify the filtered signal; and
a determining and controlling unit configured to analyze the signal output from the filtering and amplifying unit, determine whether the human body is detected, and when the human body is detected, output a determination result signal.

2. The human body sensor of claim 1, wherein the preset frequency band of the filtering and amplifying unit is lower than a frequency selected from among frequencies from 2Hz to 10Hz.

3. The human body sensor of claim 1, wherein the filtering and amplifying unit includes a filter implemented in an RC (resistor and capacitor) low-pass filter structure using a lead-type or a surface mount device (SMD)-type device and an amplifier implemented in a dual-operational amplifier (Dual OP Amp) structure.

4. The human body sensor of claim 1, further comprising an auxiliary filtering and amplifying unit configured to filter a frequency band preset to correspond to a vibration generated by a human motion from the signal output from the Doppler radar unit and amplify the filtered signal, wherein the determining and controlling unit is configured to additionally analyze the signal output from the auxiliary filtering and amplifying unit to additionally analyze whether the human body is detected.

5. The human body sensor of claim 4, wherein the preset frequency band of the auxiliary filtering and amplifying unit is lower than a frequency selected from among frequencies from 20Hz to 80Hz.

6. The human body sensor of claim 4, wherein the auxiliary filtering and amplifying unit includes a filter implemented in an RC (resistor and capacitor) low-pass filter structure using a lead-type or a surface mount device (SMD)-type device and an amplifier implemented in a dual-operational amplifier (Dual OP Amp) structure.
